# EUROPÄISCHE PATENTSCHRIFT

(11) **EP 1 817 216 B1**
(45) Veröffentlichungstag und Bekanntmachung des Hinweises auf die Patenterteilung: **06.08.2008**
(21) Anmeldenummer: 05803250.9
(22) Anmeldetag: 12.10.2005
(51) Int. Cl.: B60T 8/36, F16K 31/06

(54) **ELEKTROMAGNETISCH BETÄTIGBARES VENTIL, INSBESONDERE IN EINER BREMSANLAGE EINES KRAFTFAHRZEUGES**
ELECTROMAGNETICALLY ACTUATED VALVE, IN PARTICULAR IN A MOTOR VEHICLE BRAKING SYSTEM
SOUPAPE A ACTIONNEMENT ELECTROMAGNETIQUE, EN PARTICULIER DANS UN SYSTEME DE FREINAGE D'UN VEHICULE A MOTEUR

(30) Priorität: 25.11.2004 DE 102004056892
(43) Veröffentlichungstag der Anmeldung: 15.08.2007
(73) Patentinhaber: ROBERT BOSCH GMBH, 70442 Stuttgart (DE)
(72) Erfinder: KRATZER, Dietmar, 71732 Tamm (DE)
(86) Internationale Anmeldenummer: PCT/EP2005/055191
(87) Internationale Veröffentlichungsnummer: WO 2006/056509

(56) Entgegenhaltungen:
- EP-A- 0 924 439
- DE-A1- 3 203 533
- FR-A- 2 847 326
- GB-A- 843 891

## Beschreibung

### Stand der Technik

Die Erfindung betrifft ein elektromagnetisch betätigbares Ventil für eine Bremsanlage eines Kraftfahrzeuges, nach dem Oberbegriff eines der Ansprüche 1 oder 2.

Ein derartiges elektromagnetisch betätigbares Ventil ist beispielsweise bekannt aus der FR 2 847 326 A1. Dieses Ventil weist einen rotationssymmetrischen Magnetanker auf, der mit einer Stirnfläche an einem das Ventilschließglied an einem Dichtsitz betätigenden Ventilstößel anliegt.

Da ein derartiger Magnetanker in der Praxis bei vertretbarem Aufwand nicht rotationssymmetrisch herstellbar ist, hat dieser über den Umfang unterschiedliche magnetische Eigenschaften und Formeigenschaften, die sich direkt oder indirekt auf die Präzision der Ventilfunktion auswirken. Unter diesen Eigenschaften sind zum Beispiel örtlich schwankende Werkstoffeigenschaften mit einem entsprechenden Einfluss auf die magnetische Funktion zu verstehen. Auch kommen Planlaufabweichungen an der Stirnfläche zum Stößel vor, die die Stößelposition am Ventilsitz beeinflussen. Bekannt sind weiterhin Schwankungen der Oberflächenqualität des Magnetankers mit einem entsprechenden Einfluss auf die Reibverhältnisse des Magnetankers an dem ihn axial führenden Gehäuseteil.

Bei den bekannten elektromagnetisch betätigbaren Ventilen ist die Rotation des Ankers um seine Längsachse nicht eingeschränkt, d. h., es wird eine Ungenauigkeit bezüglich der oben angesprochenen Ventilfunktionen zugelassen.

In Bezug auf den mit dem Magnetanker zusammenwirkenden Ventilstößel ist anzumerken, dass dieser in einer Längsbohrung des Ventilgehäuses geführt ist, wobei eine Rotation des Ventilstößels zugelassen wird. Da auch ein Ventilstößel bei vertretbarem Aufwand nicht als idealsymmetrisches Bauteil herzustellen ist, und somit über seinen Umfang unterschiedliche Materialeigenschaften hat oder Maßabweichungen aufweist, können sich auch diese Unterschiede negativ auf die Ventilfunktion auswirken.

Aufgabe der Erfindung ist es, die durch die zulässigen rotativen Freiheitsgrade des Ankers und des Ventilstößels entstehenden Ungenauigkeiten der Ventilfunktion zu verringern.

Aus der GB 843 891 A ist ein von Permanentmagneten betätigbares Ventil mit einem Stößelelement zur Steuerung des Querschnitts eines Ventilsitzes bekannt. Das Stößelelement ist längsbeweglich geführt in einem Ventilgehäuse aufgenommen. Um eine Rotationsbewegung dieses Ventilgehäuses zu verhindern sind Mittel vorgesehen, die zwei ortsfeste Blockelemente mit in Längsrichtung des Ventils verlaufenden Nuten umfassen. Die Nuten bilden eine Führung für einen fest am Ventilgehäuse angeordneten Führungskörper.

Die DE 32 03 533 A1 offenbart ein hydraulisch betätigtes Ventil mit angebautem elektromechanischem Weggeber, das zur Steuerung von Steuerquerschnitten einen hülsenförmigen, mit Radialbohrungen versehenen Schieber aufweist. Letzterer ist durch ein Übertragungsglied betätigbar. Das Übertragungsglied hat einen Abschnitt mit Sechskantprofil, der eine entsprechend gestaltete Öffnung einer Sicherungsscheibe durchdringt Die Sicherungsscheibe sichert das Übertragungsglied gegen Verdrehung.

Aus der EP 924 439 A1 ist ein hydraulisches Steuerventil mit einem ebenfalls am Verdrehen gehinderten Steuerschieber bekannt. Die Verdrehsicherung wird durch einen Führungsring für den Steuerschieber bewirkt, der von einem Federelement mit einander gegenüberliegenden, kegelförmigen Wirkflächen, die jeweils mit einer radial angeordneten Riffelung versehen sind, kraft- und formschlüssig im Gehäuse des Steuerventils verdrehfest gehalten ist.

### Vorteile der Erfindung

Ein erfindungsgemäßes elektromagnetisch betätigbares Ventil für eine Bremsanlage eines Kraftfahrzeuges gemäß den Merkmalen eines der Ansprüche 1 oder 2 hat den Vorteil, dass durch eine Beschränkung der Rotation des Ankers bzw. des Ventilstößels um ihre jeweilige Längsachse die durch eine Rotation verursachten Beeinflussungen auf die Ventilfunktion verhindert werden. Dadurch ist sichergestellt, dass die bei der Ventilmontage eingestellten und überprüften Parameter des Ventils, zumindest bezogen auf den Magentanker und den Ventilstößel, im Laufe des nachfolgenden Handlings bzw. über die Lebensdauer sich nicht verändern.

Die Erfindung ist auf konstruktive Ausgestaltungsvarianten für die Mittel zur Vermeidung einer Rotation des Ankers bzw. des Stößelelements gerichtet.

Vorteilhafte Weiterbildungen des elektromagnetisch betätigbaren Ventils, insbesondere in einer Bremsanlage sind im Unteranspruch angegeben. Zeichnung

Ausführungsbeispiele der Erfindung sind in der Zeichnung dargestellt und werden nachfolgend näher erläutert. Es zeigen:
Figur 1 ein erstes erfindungsgemäßes elektromagnetisch betätigbares Ventil in einem Längsschnitt,
Figur 2 einen Schnitt in der Ebene II-II der Figur 1,
Figur 3 eine gegenüber der Figur 2 abgewandelte Ausführungsform ebenfalls im Schnitt in der Ebene II-II,
Figur 4 einen Längsschnitt durch ein zweites erfindungsgemäßes elektromagnetisch betätigbares Ventil,
Figur 5 einen Schnitt in der Ebene V-V der Figur 4,
Figur 6 ein drittes elektromagnetisch betätigbares Ventil in seinem oberen Bereich im Längsschnitt,
Figur 7 einen Schnitt in der Ebene Vll-Vll der Figur 6,
Figur 8 ein drittes elektromagnetisch betätigbares Ventil in seinem oberen Bereich im Längsschnitt,
Figur 9 einen Schnitt in der Ebene IX-IX der Figur 8,
Figur 10 ein viertes elektromagnetisch betätigbares Ventil in seinem oberen Bereich im Längsschnitt und
Figur 11 einen Schnitt in der Ebene XI-XI der Figur 10.

### Beschreibung der Ausführungsbeispiele

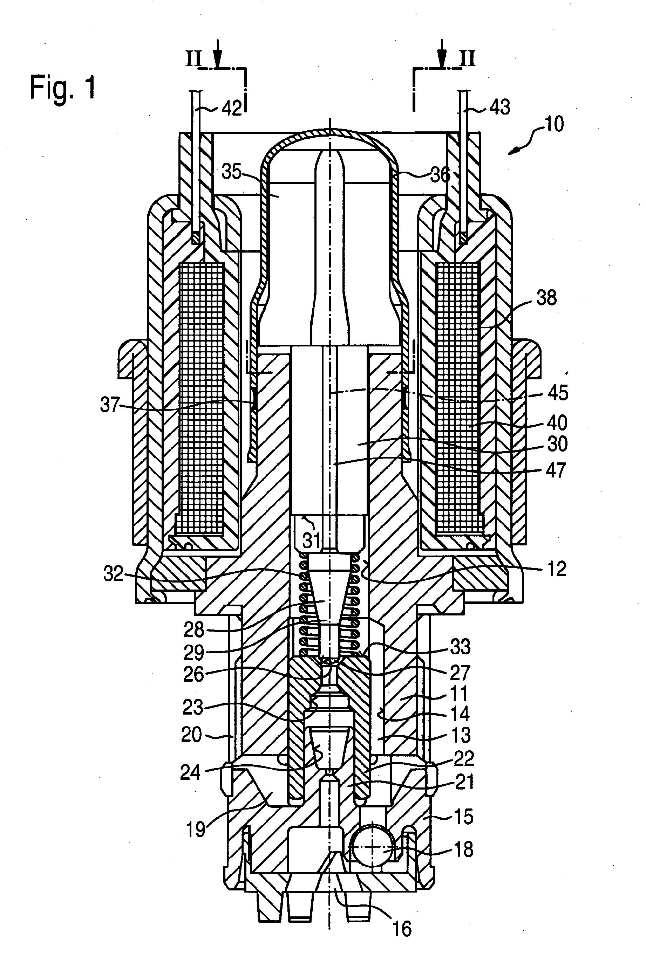

Das in der Figur 1 im Längsschnitt dargestellte elektromagnetisch betätigbare Ventil 10 mit Druckbegrenzung findet Verwendung in Kraftfahrzeug-Bremsantagen mit Schlupfregelung, wie Antiblockierschutz und/oder Antriebsschlupfregelung. Das Ventil 10 weist ein längliches Ventilgehäuse 11 auf, in dem eine Längsbohrung 12 ausgebildet ist. Die Längsbohrung 12 weist in einem Abströmbereich 13 mehrere Längsnuten 14 auf, von denen in der Figur 1 lediglich eine Längsnut 14 erkennbar ist. Das Ventilgehäuse 11 ist auf der dem Abströmbereich 13 zugewandten Seite stirnseitig mit einem Ventilanschlusselement 15 verbunden. Das Ventilanschlusselement 15 weist einen Zulauf 16 für ein Druckmittel und ein Rückschlagventil 18 auf. Auf der dem Ventilgehäuse 11 zugewandten Seite ist ein ringförmiger Rückströmbereich 19 ausgebildet, der mit den Längsnuten 14 zusammenwirkt, und umfangsseitig zusammen mit dem Ventilgehäuse 11 von einem Radialfilterelement 20 umfasst ist. Auf einem domartigen Fortsatz 21 des Ventilanschlusselements 15 ist ein topfförmiger Ventilkörper 22 aufgeschoben, welcher umfangsseitig, mit Ausnahme im Bereich der Längsnuten 14, in die Längsbohrung 12 des Ventilgehäuses 11 eingepresst ist.

Der Ventilkörper 22 kommuniziert über eine Stufenbohrung 23 und eine im Ventilanschlusselement 15 angeordnete Zulaufbohrung 24 mit dem Zulauf 16 für das Druckmittel. Auf der dem Fortsatz 21 abgewandten Ende des Ventilkörpers 22 ist in der Stufenbohrung 23 ein kegelförmiger Sitzbereich 26 ausgebildet. Dieser Sitzbereich 26 wirkt mit einem kalottenförmigen Ende 27 eines Stößelelements 28 zusammen, so dass bei auf dem Sitzbereich 26 abgesenkten Ende 27 ein Dichtsitz erzielbar ist.

Das Stößelelement 28 weist auf der dem Ventilkörper 22 zugewandten Seite einen mit mehreren unterschiedlichen Außendurchmessern versehenen ersten Abschnitt 29 auf, der mit einem zylindrischen Abschnitt 30 verbunden ist. Auf der zwischen den beiden Abschnitten 29, 30 gebildeten Schulter 31 liegt das eine Ende einer Druckfeder 32 an, die sich mit ihrem anderen Ende auf der zugewandten Stirnfläche 33 des Ventilkörpers 22 abstützt. An der dem Abschnitt 29 gegenüberliegenden Seite liegt an der Stirnfläche des Stößelelements 28 ein Anker 35 an. Der Anker 35, der sich in Verlängerung des Ventilgehäuses 11 befindet, ist von einer Kappe 36 umschlossen, welche in ihrem Innenumfang teilweise am Ventilgehäuse 11 anliegt und mit diesem mittels einer Schweißnaht 37 verbunden ist.

Der Anker 35 ist innerhalb der Kappe 36 um einen geringen Wegbetrag axial in Längsrichtung des Ventils 10 verschieblich angeordnet und wirkt mit dem Stößelelement 28 zusammen. Die Kappe 36 bzw. der Anker 35 ist von einem Spulenelement 38 umfasst, das mit einem topfförmigen Magnetgehäuse 39 mit dem Ventilgehäuse 11 durch Umbördeln an einem Befestigungsflansch 41 verbunden ist. Die Erregerspule 40 des Spulenelements 38 ist über zwei Anschlussfahnen 42, 43 elektrisch bestrombar bzw. kontaktierbar.

Das soweit beschriebene Ventil 10 ist mit seinem dem Spulenelement 38 gegenüberliegenden Ende in einen nicht dargestellten Ventilblock einsetzbar, der einen Zulauf- und einen Ablaufkanal aufweist, der mit dem Zulauf 16 bzw. über das Radialfilterelement 20 mit dem Rückströmbereich 19 des Ventils 10 verbunden ist.

Bei nicht bestromter Erregerspule 40 ist das Ventil 10 offen, das bedeutet, dass die Druckfeder 32 das Stößelelement 28 mit seinem Ende 27 vom Ventilkörper 22 wegdrückt, und so einen Durchfluss von Druckmittel über den Zulauf 16, die Zulaufbohrung 24 und den Abströmbereich 13 in Richtung des Rückströmbereiches 19 ermöglicht. Bei bestromten Spulenelement 38 wird hingegen das Ende 27 des Stößelelements 28 in Richtung des Sitzes 26 gedrückt, um eine entsprechende Drosselung bzw. ein Verhindern des Druckmittelflusses zu ermöglichen.

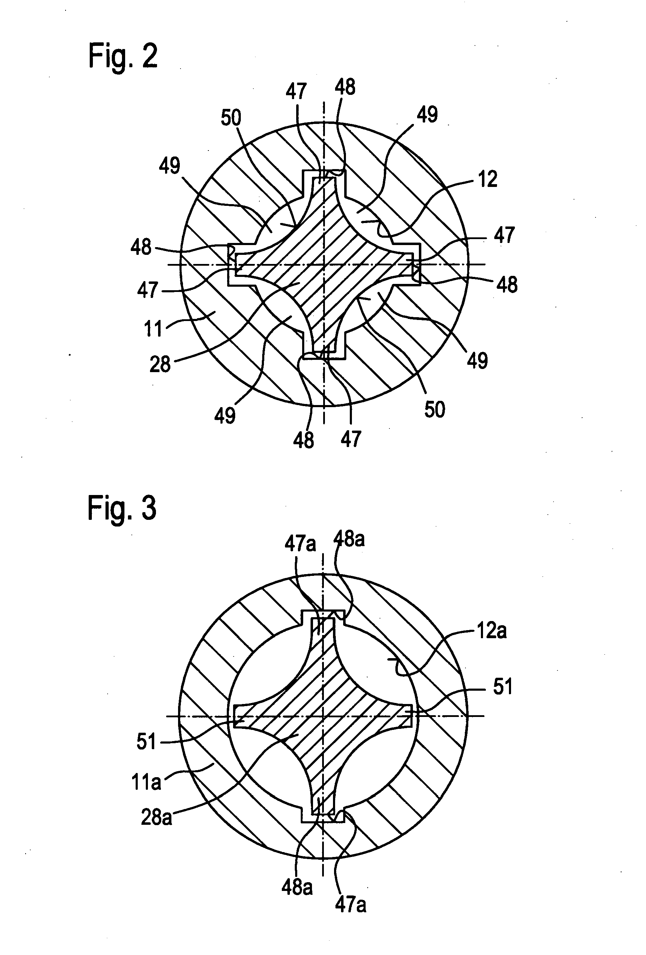

Um während des Betriebes des Ventils 10 eine Drehung des zylindrischen Stößelelements 28 um seine Längsachse 45 zu verhindern, weist der Querschnitt des Stößelelements 28, wie anhand der Figur 2 am besten erkennbar ist, vier, um jeweils 90 Grad zueinander versetzt angeordnete Führungsabschnitte 47 auf. Ferner sind in der Längsbohrung 12 des Ventilgehäuses 11, zumindest im Bereich der Führungsabschnitte 47, vier Führungsnuten 48 ausgebildet. In diese Führungsnuten 48 greifen die Führungsabschnitte 47 ein, so dass eine Drehung des Stößelelements 28 um dessen Längsachse 45 vermieden wird. Ferner erkennt man noch vier Druckmittelausgleichsbereiche 49 zwischen dem Stößelelement 28 und der Bohrung 12 des Ventilgehäuses 11, um bei einer Bewegung des Stößelelements 28 und des Ankers 35 Druckmittel verdrängen zu können. Diese Druckmittelausgleichsbereiche 49 werden von gerundet ausgebildeten Längsseiten 50 des Stößelelements 28 gebildet.

Bei der in der Figur 3 dargestellten Abwandlung mit dem Stößelelement 28a und dem Ventilgehäuse 11a weist letzteres lediglich zwei, um 180 Grad zueinander versetzt ausgebildete Führungsnuten 48a auf, die mit entsprechenden Führungsabschnitten 47a des Stößelelements 28a zusammenwirken. Die zwei anderen stegförmigen Abschnitte 51 des Stößelelements 28a wirken mit der Innenwandung der Längsbohrung 12a zusammen.

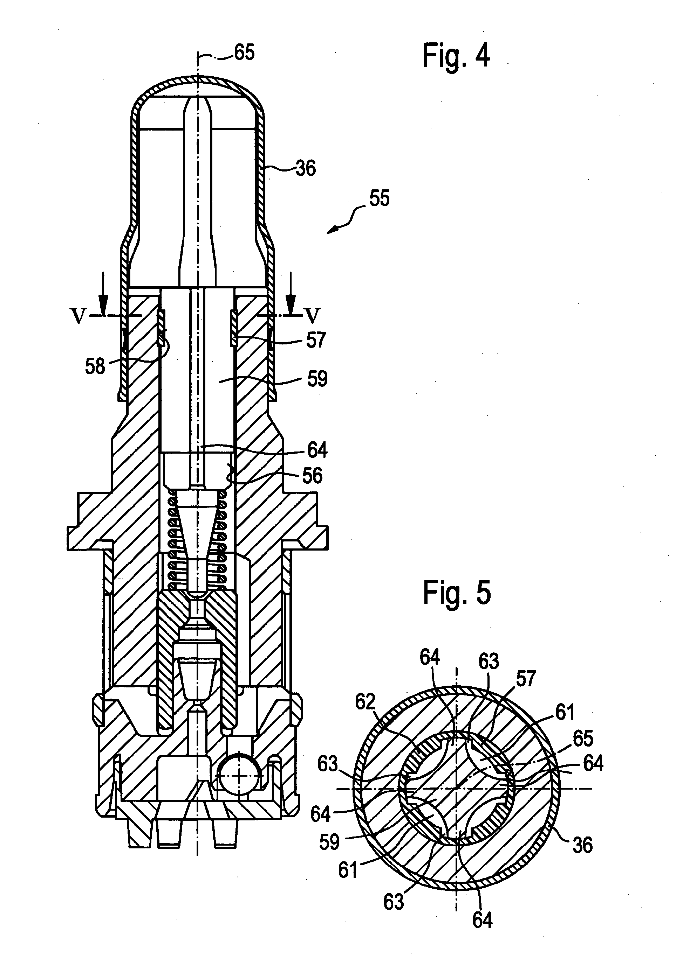

Bei dem in den Figuren 4 und 5 dargestellten erfindungsgemäßen Ventil 55 wurde aus Vereinfachnungsgründen auf eine zeichnerische Darstellung des elektrischen Teils bzw. des Spulenkörpers verzichtet. Das Ventil 55 unterscheidet sich von dem Ventil 10 insbesondere durch einen in die Längsbohrung 56 des Ventilgehäuses 11b eingesetzten Führungskörper 57. Zur axialen Sicherung bzw. Aufnahme des Führungskörpers 57 in der Längsbohrung 56 weist die Längsbohrung 56 eine ringnut förmige Ausnehmung 58 auf.

Der Führungskörper 57 ist vorzugsweise als Kunststoffspritzkörper ausgebildet und weist eine ringförmige Form auf, die es ermöglicht, den Führungskörper 57 nachträglich in die Ausnehmung 58 einzubringen. Auf der dem Stößelelement 59 zugewandten Seite hat der Führungskörper 57 im Bereich der Druckmittelausgleichsbereiche 61 vier, in jeweils gleichen Winkelabständen zueinander angeordnete Formelemente 62, zwischen denen jeweils ein Freiraum 63 ausgebildet ist, in die die stegförmigen Abschnitte 64 des Stößelelements 59 eingreifen. Die Abschnitte 64 sind über die gesamte Länge des Stößelelements 59 gleich ausgebildet, um außerhalb des Führungskörpers 75 eine Führung des Stößelelements 59 in der Längsbohrung 56 des Ventilgehäuses 11b zu ermöglichen. Das heißt, dass das Stößelelement 59 im Bereich der Abschnitte 64 eine dem Innendurchmesser der Längsbohrung 56 angepasste Erstreckung aufweiset. Auch mittels des Führungskörpers 57 lässt sich somit eine Drehung des Stößelelements 59 um dessen Längsachse 65 vermeiden. Bei dem Ventil 55 sind mit Ausnahme der Ausnehmung 58 keine weiteren Änderungen am Ventilgehäuse erforderlich, insbesondere müssen im Gegensatz zum Ventilgehäuse 11, 11a keine Längsnuten bzw Führungsabschnitte 47, 47a ausgebildet werden.

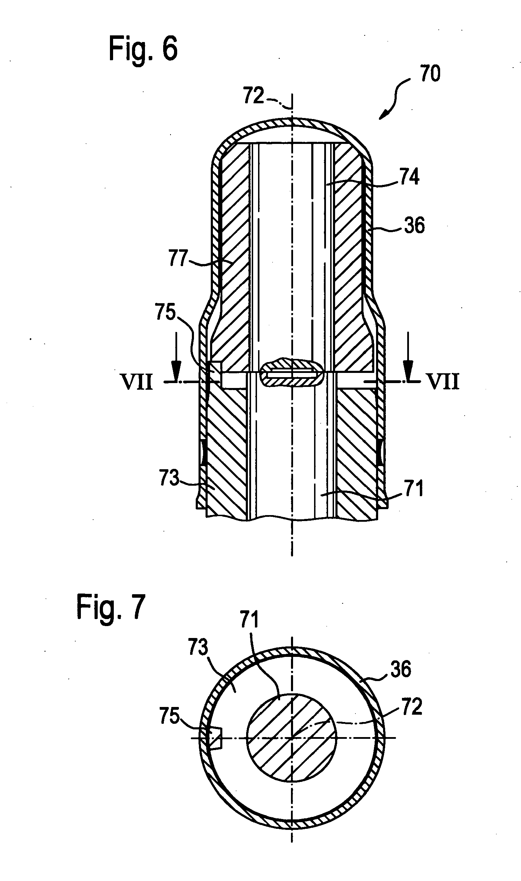

Bei dem in den Figuren 6 und 7 dargestellten Ausführungsbeispiel mit dem erfindungsgemäßen Ventil 70 wird ebenfalls entsprechend dem Ventil 55 auf eine zeichnerische Darstellung des Spulenelements aus Vereinfachungsgründen verzichtet. Bei dem Ventil 70 wird im Gegensatz zu den beiden Ventilen 10 und 55 eine Drehung des Stößelelements 71 um seine Längsachse zugelassen, während eine Drehung des Ankers 74 um dessen Längsachse 72 vermieden wird. Dies wird durch einen Fortsatz 75 am Ventilgehäuses 73 bewirkt, der auf der dem Anker 74 zugewandten Seite angeordnet ist. Der Fortsatz 75 ist vorzugsweise einstückig am Ventilgehäuse 73 des Ventils 70 angeformt, und ragt teilweise in eine in Längsrichtung des Ankers 74 verlaufende Volumenausgleichsnut 77 hinein. Derartige Volumenausgleichsnuten 77 dienen dem Verdrägen von Druckmittel zwischen den Stirnseiten des Ankers 74 und sind bei derartigen Ventilen stets vorhanden, d.h., sie müssen im Rahmen der Erfindung nicht zusätzlich ausgebildet werden.

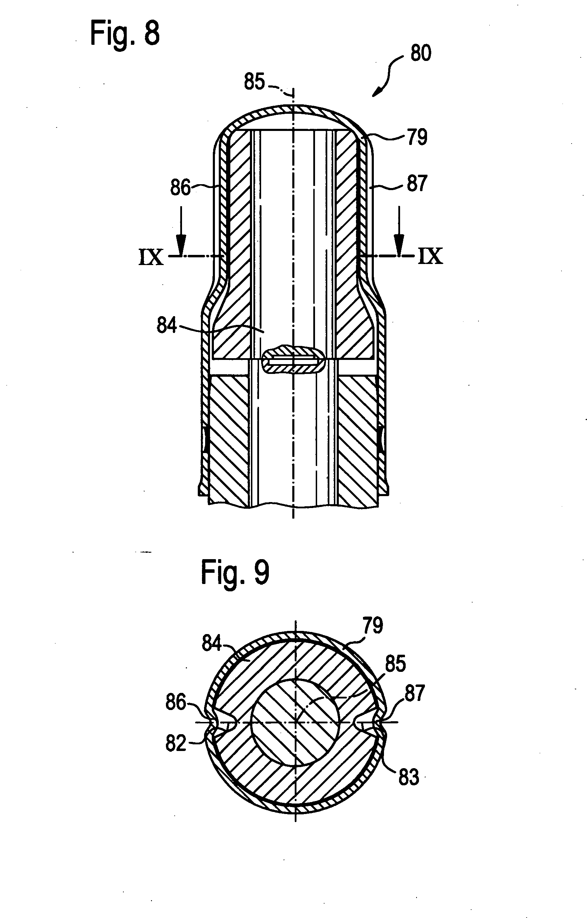

Bei der in den Figuren 8 und 9 abgewandelten Ausführungsform weist die Kappe 79 des erfindungsgemäßen Ventils 80 im Bereich der beiden Volumenausgleichsnuten 82, 83 des Ankers 84 zwei Sicken 86 und 87 auf, die in die jeweilige Volumenausgleichsnut 82 und 83 bereichsweise eingreift. Auch bei dem Ventil 80 wird somit durch Formschluss eine Drehung des Ankers 84 um seine Längsachse 85 verhindert.

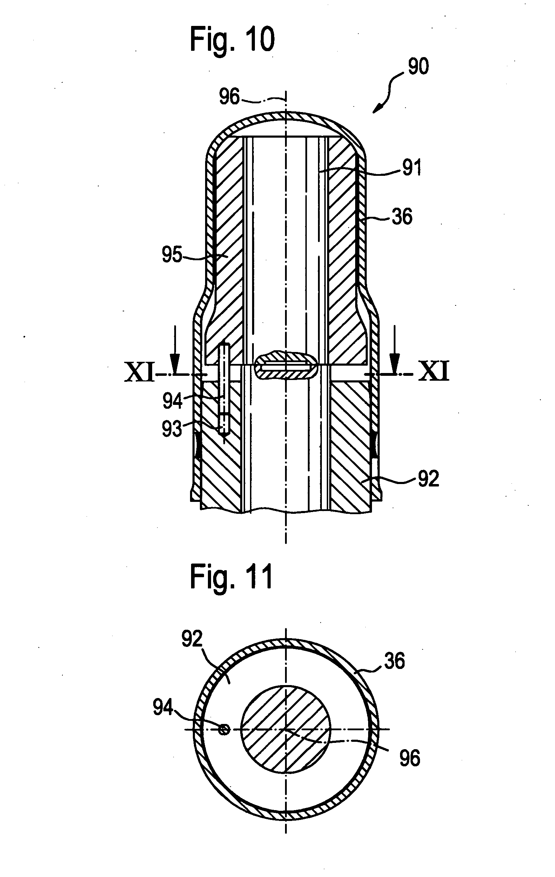

Bei dem in den Figuren 10 und 11 dargestellten erfindungsgemäßen Ventil 90 ist in dem Ventilgehäuse 92 auf der dem Anker 91 zugewandten Seite eine Sacklochbohrung 93 ausgebildet. In der Sacklochbohrung 93 ist ein Stift 94 eingepresst. Der Stift 94 greift wiederum in eine der Volumenausgleichsnuten 95 des Ankers 91 ein, und verhindert so eine Drehung des Ankers 91 um dessen Längsachse 96.

Zusammenfassend wird somit bei den Ventilen 10 und 55 eine Drehung des jeweiligen Stößelelements 28, 59 um deren Längsachse 45, 65 verhindert. Bei den Ventilen 70, 80 und 90 wird hingegen eine Drehung des jeweiligen Ankers 74, 84 und 91 um deren Längsachse 72, 85 und 96 verhindert. Ergänzend wird erwähnt, dass es im Rahmen der Erfindung liegt, die einzelnen Maßnahmen miteinander zu kombinieren, um bei einem Ventil sowohl eine Drehung des Stößelelements, als auch eine Drehung des Ankers zu verhindern. So ist es beispielsweise auch denkbar, das Ventil 10 oder 55 über eine kupplungsartige Verbindung mit dem Anker zu verbinden, um einerseits eine Drehung des Ankers zu verhindern, andererseits jedoch eine gewisse Beweglichkeit zum Stößelelement hin zu ermöglichen. Sinngemäß sind auch Kupplungen des Ankers des Ventils 70, 80 und 90 mit ihrem jeweiligen Stößelelement möglich.

## Patentansprüche

1. Elektromagnetisch betätigbares Ventil (10; 55; 70; 80; 90) für eine Bremsanlage eines Kraftfahrzeuges, mit einem von einer Magnetspule (38) betätigbaren Anker (35; 74; 84; 91), der mit einem in einem Ventilgehäuse (11;11a; 11b; 73; 92) längsverschieblich angeordneten Stößelelement (28; 28a; 59; 71) zusammenwirkt, wobei das Stößelelement (28; 28a; 59; 71) ein Schließglied (27) aufweist, das mit einem Ventilsitz (26) zur Durchflusssteuerung eines Druckmittels zusammenwirkt, **dadurch gekennzeichnet, dass** der Anker (35; 74; 84; 91) bzw. das Stößelelement (28; 28a; 59; 71) mit Mitteln zur Vermeidung der Drehung des Ankers (35; 74; 84; 91) bzw. des Stößelelements (28; 28a; 59; 71) um seine Längsachse (45; 65; 72; 85; 96) ausgestattet ist, wobei die Mittel wenigstens einen mit dem Ventilgehäuse (92) verbundenen Führungsstift (94) umfassen, der in eine in Bewegungsrichtung des Ankers (91) ausgebildete Ausnehmung (95) eingreift.

2. Elektromagnetisch betätigbares Ventil (10; 55; 70; 80; 90) für eine Bremsanlage eines Kraftfahrzeuges, mit einem von einer Magnetspule (38) betätigbaren Anker (35; 74; 84; 91), der mit einem in einem Ventilgehäuse (11; 11a; 11b; 73; 92) längsverschieblich angeordneten Stößelelement (28; 28a; 59; 71) zusammenwirkt, wobei das Stößelelement (28; 28a; 59; 71) ein Schließglied (27) aufweist, das mit einem Ventilsitz (26) zur Durchflusssteuerung eines Druckmittels zusammenwirkt, **dadurch gekennzeichnet, dass** der Anker (35; 74; 84; 91) bzw. das Stößelelement (28; 28a; 59; 71) mit Mitteln zur Vermeidung der Drehung des Ankers (35; 74; 84; 91) bzw. des Stößelelements (28; 28a; 59; 71) um seine Längsachse (45; 65; 72; 85; 96) ausgestattet ist, wobei die Mittel eine den Anker (84) zumindest bereichsweise mit radialem Spiel umgreifende Gehäusekappe (36) umfassen und die Gehäusekappe (36) wenigstens eine in Richtung des Ankers (84) ragende Sicke (86, 87) aufweist, die wiederum in eine in Bewegungsrichtung des Ankers (84) ausgebildete Ausnehmung (82, 83) eingreift.

3. Ventil nach Anspruch 1 oder 2, **dadurch gekennzeichnet, dass** die Ausnehmung eine Volumenausgleichsnut (77; 82, 83; 95) ist.

## Claims

1. Electromagnetically operable valve (10; 55; 70; 80; 90) for a brake system of a motor vehicle, comprising an armature (35; 74; 84; 91) which can be operated by a magnet coil (38) and interacts with a pusher element (28; 28a; 59; 71) which is arranged in a longitudinally displaceable manner in a valve housing (11; 11a; 11b; 73; 92), with the pusher element (28; 28a; 59; 71) having a closing member (27) which interacts with a valve seat (26) for controlling the throughflow of a pressure medium, **characterized in that** the armature (35; 74; 84; 91) or the pusher element (28; 28a; 59; 71) is equipped with means for preventing rotation of the armature (35; 74; 84; 91) or of the pusher element (28; 28a; 59; 71) about its longitudinal axis (45; 65; 72; 85; 96), with the means comprising at least one guide pin (94) which is connected to the valve housing (92) and engages in a recess (95) which is formed in the movement direction of the armature (91).

2. Electromagnetically operable valve (10; 55; 70; 80; 90) for a brake system of a motor vehicle, comprising an armature (35; 74; 84; 91) which can be operated by a magnet coil (38) and interacts with a pusher element (28; 28a; 59; 71) which is arranged in a longitudinally displaceable manner in a valve housing (11; 11a; 11b; 73; 92), with the pusher element (28; 28a; 59; 71) having a closing member (27) which interacts with a valve seat (26) for controlling the throughflow of a pressure medium, **characterized in that** the armature (35; 74; 84; 91) or the pusher element (28; 28a; 59; 71) is equipped with means for preventing rotation of the armature (35; 74; 84; 91) or of the pusher element (28; 28a; 59; 71) about its longitudinal axis (45; 65; 72; 85; 96), with the means comprising a housing cap (36) which surrounds the armature (84) at least in regions with radial play and the housing cap (36) having at least one bead (86, 87) which projects in the direction of the armature (84) and again engages in a recess (82, 83) which is formed in the movement direction of the armature (84).

3. Valve according to Claim 1 or 2, **characterized in that** the recess is a volume-compensating groove (77; 82, 83; 95).

## Revendications

1. Soupape à commande électromagnétique (10 ; 55 ; 70 ; 80 ; 90) pour une installation de freins d'un véhicule automobile comportant un induit (35 ; 74 ; 84 ; 91) actionné par une bobine électromagnétique (38), l'induit coopérant avec un élément de poussoir (28 ; 28a ; 59 ; 71) installé de façon à coulisser longitudinalement dans un boîtier de soupape (11 ; 11a ; 11b ; 73 ; 92),
l'élément de poussoir (28 ; 28a ; 59 ; 71) comportant un élément d'obturation (27) coopérant avec un siège d'étanchéité (26) pour commander le passage d'un agent de pression,
**caractérisée en ce que**
l'induit (35 ; 74 ; 84 ; 91) ou l'élément de poussoir (28 ; 28a ; 59 ; 71) sont munis de moyens pour éviter la rotation de l'induit (35 ; 74 ; 84 ; 91) ou de l'élément de poussoir (28 ; 28a ; 59 ; 71) autour de son axe longitudinal (45 ; 65 ; 72 ; 85 ; 96),
les moyens comprenant au moins une broche de guidage (94) reliée au boîtier de soupape (92), cette broche pénétrant dans une cavité (95) réalisée dans la direction de déplacement de l'induit (91).

2. Soupape à commande électromagnétique (10 ; 55 ; 70 ; 80 ; 90) pour une installation de freins d'un véhicule automobile comportant un induit (35 ; 74 ; 84 ; 91) actionné par une bobine électromagnétique (38), l'induit coopérant avec un élément de poussoir (28 ; 28a ; 59 ; 71) installé de façon à coulisser longitudinalement dans un boîtier de soupape (11; 11a ; 11b; 73; 92),
l'élément de poussoir (28 ; 28a ; 59 ; 71) comportant un élément d'obturation (27) coopérant avec un siège d'étanchéité (26) pour commander le passage d'un agent de pression,
**caractérisée en ce que**
l'induit (35 ; 74 ; 84 ; 91) ou l'élément de poussoir (28 ; 28a ; 59 ; 71) sont munis de moyens pour éviter la rotation de l'induit (35 ; 74 ; 84 ; 91) ou de l'élément de poussoir (28 ; 28a ; 59 ; 71) autour de son axe longitudinal (45 ; 65 ; 72 ; 85 ; 96),
les moyens comprenant un capuchon de boîtier (36) entourant l'induit (84), au moins par zones, avec du jeu radial et le capuchon de boîtier (36) comporte une moulure (86, 87) dirigée au moins vers l'induit (84), cette moulure pénétrant dans une cavité (82, 83) elle-même réalisée dans la direction de déplacement de l'induit (84).

3. Soupape selon la revendication 1 ou 2,
**caractérisée en ce que**
la cavité est une rainure de compensation de volume (77 ; 82, 83 ; 95).
